# EUROPEAN PATENT APPLICATION

(11) **EP 3 459 847 A1**
(43) Date of publication of application: **27.03.2019**
(21) Application number: 17204822.5
(22) Date of filing: 30.11.2017
(51) Int. Cl.: B64C 27/35, B64C 27/51, B64C 27/54

(54) **ROTOR HUB WITH BLADE-TO-BLADE DAMPERS AND AXISYMMETRIC ELASTOMERIC SPHERICAL BEARINGS**

(30) Priority: 22.09.2017 US 201715713277
(71) Applicant: Bell Helicopter Textron Inc., Fort Worth, TX 76101 (US)
(72) Inventor: MARSHALL, Bryan, Mansfield, TX 76063 (US); WIINIKKA, Mark, Hurst, TX 76053 (US); SHERRILL, Paul, Grapevine, TX 76051 (US); STAMPS, Frank, Colleyville, TX 76034 (US)
(74) Representative: Barker Brettell LLP

(57) **Abstract**

An aircraft rotor assembly (104) has a yoke (110) defining a plurality of bearing pockets (114). Each bearing pocket houses an axisymmetric elastomeric spherical bearing (116) at least partially therein. The axisymmetric elastomeric spherical bearings (116) comprise flap, lead-lag, and pitch hinges for rotor blades (106) coupled thereto. The rotor blades (106) maintain a first in-lane frequency of less than 1/rev through the use of damper assemblies (142) coupled between adjacent blades (106).

## Description

### BACKGROUND

When a helicopter is flying horizontally, or hovering in the wind, differing relative wind speeds cause the rotating blades to experience differing horizontal forces throughout each rotation. For example, during forward flight, when the blade is advancing it is encountering a larger relative air speed than when the blade is retreating. Accordingly, each blade experiences large and varying moments in the leading and lagging directions. Rather than rigidly attaching blades to a yoke and forcing the yoke to absorb the large varying moments, the blades may be attached to the yoke via a lead-lag hinge which has an axis of rotation substantially parallel to the mast axis. In order to prevent the blades from rotating too far back and forth about the lead-lag hinge, and to prevent the back and forth movement from matching the resonant frequency of the drive system, dampers may be attached to the blades.

The blades also experience large forces in a direction parallel to the lead-lag hinge axis. In order to allow some movement in this direction, a flap hinge may be utilized. The flap hinge attaches the blades to the yoke about an axis perpendicular to the lead-lag hinge axis.

In addition to the optional lead-lag and flap hinges, the blades must be able to collectively and cyclically alter their pitch to enable vertical and horizontal movement of the helicopter. Therefore, each blade must be hinged about a pitch change axis that is generally perpendicular to both the lead-lag hinge and flap hinge axes.

### BRIEF DESCRIPTION OF THE DRAWINGS

FIG. 1 is an oblique view of an aircraft comprising a rotor assembly according to this disclosure.
FIG. 2 is an oblique view of a portion of the aircraft of FIG. 1 showing the rotor assembly.
FIG. 3 is an oblique view of the portion of the aircraft of FIG. 1 showing the rotor assembly.
FIG. 4 is a top view of a portion of the aircraft of FIG. 1 showing the rotor assembly.
FIG. 5 is a top, cross-sectional view of a portion of the rotor hub assembly of FIG. 4.
FIG. 6 is a top, cross-sectional view of a portion of the rotor hub assembly of FIG. 5.

### DETAILED DESCRIPTION

In this disclosure, reference may be made to the spatial relationships between various components and to the spatial orientation of various aspects of components as the devices are depicted in the attached drawings. However, as will be recognized by those skilled in the art after a complete reading of this disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction. In addition, the use of the term "coupled" throughout this disclosure may mean directly or indirectly connected, moreover, "coupled" may also mean permanently or removably connected, unless otherwise stated.

This disclosure provides a novel rotor hub assembly that utilizes a single axisymmetric elastomeric spherical bearing for each blade to serve as the lead-lag, flap, and pitch hinges. The rotor hub assembly also utilizes dampers attached between adjacent blades to maintain in-plane oscillations below 1/rev, i.e., below the resonant frequency of the drive system.

In addition to permitting blade rotation about three separate axes, another advantage of utilizing axisymmetric elastomeric spherical bearings is that they have a larger transverse stiffness than traditional bearings of similar size. The increased stiffness of the axisymmetric elastomeric spherical bearing will permit the use of a smaller bearing than would be required if utilizing a traditional bearing to react the large loads transmitted by in-plane dampers. Moreover, because the dampers are blade-to-blade, instead of blade-to-yoke, the yoke does not need to directly react those large loads. Therefore, the yoke does not need to be as strong as the yoke in a blade-to-yoke rotor. Accordingly, both the bearings and the yoke may be smaller and lighter. The rotor assembly designs according to this disclosure fall under the definition of a soft-in-plane rotor, with lead-lag hinges radially spaced from the mast axis and allowing for in-plane lead-lag motion of the blades of, preferably, at least 1 degree in each direction from a neutral position. Because of the need to keep first in-plane frequencies on either side of 1/rev, the soft-in-plane rotors described herein utilize blade-to-blade damper assemblies to provide a resistive force that keeps the frequency below 1/rev.

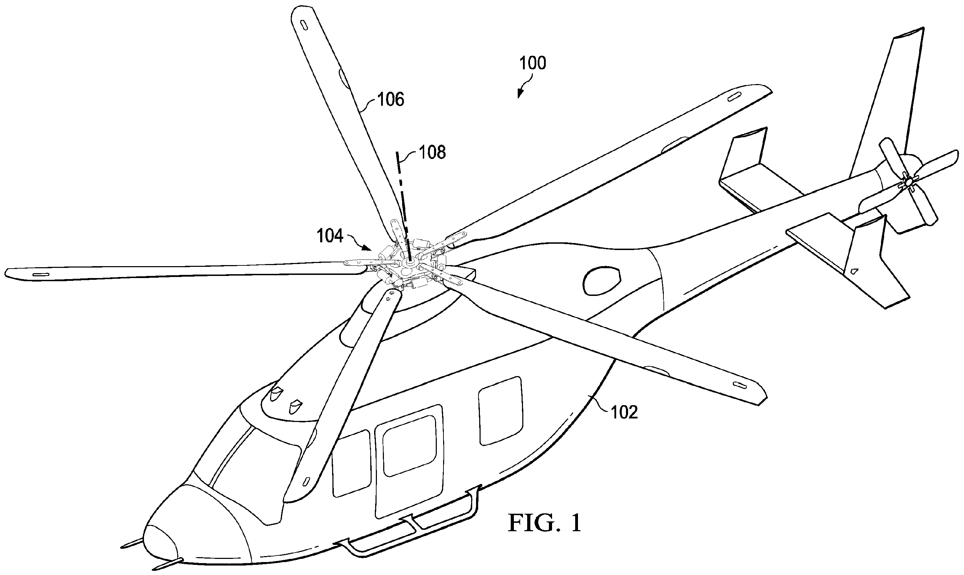

FIG. 1 illustrates an aircraft 100 comprising a main rotor assembly 104 according to this disclosure. Aircraft 100 comprises a fuselage 102 and rotor assembly 104 with a plurality of rotor blades 106. Rotor assembly 104 is driven in rotation about a mast axis 108 by torque provided by a powerplant housed within fuselage 102. Though aircraft 100 is shown as a helicopter having a single main rotor, rotor assembly 104 can alternatively be used on other types of aircraft, such as, but not limited to, helicopters having more than one main rotor or on tiltrotor aircraft. Also, rotor assembly 104 is shown as a main rotor for providing vertical lift and having collective and cyclic control, though rotor assembly 104 may alternatively be configured to provide longitudinal or lateral thrust, such as in a helicopter tail rotor or airplane propeller.

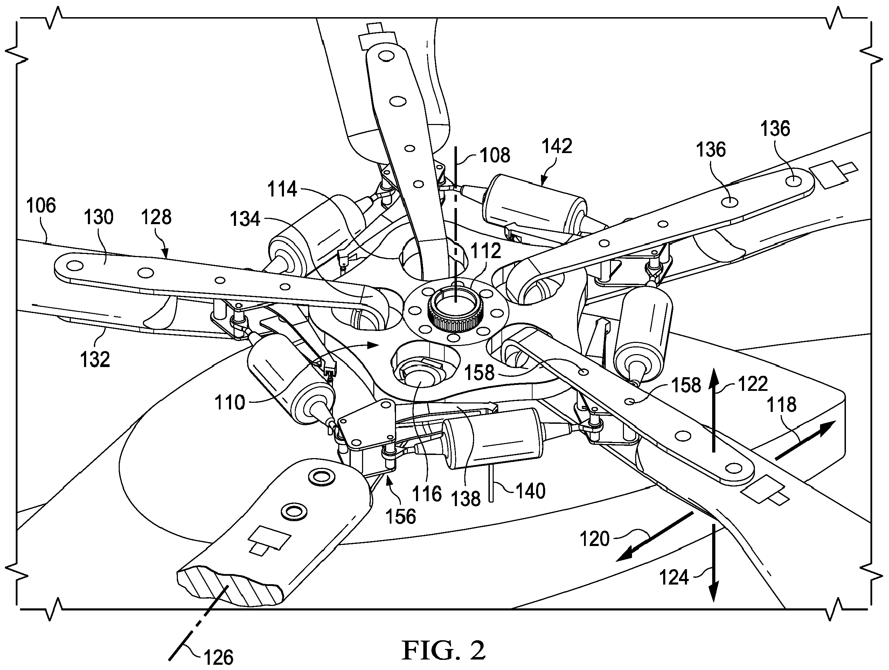

FIGS. 2 through 4 illustrate rotor assembly 104, various components being removed for ease of viewing. A yoke 110 is coupled to a mast 112 for rotation with mast 112 about mast axis 108. Yoke 110 has a honeycomb configuration in the embodiment shown, though in other embodiments, yoke 110 may have another configuration, such as a central portion with radially extending arms. Yoke 110 is preferably formed from a composite material, such as carbon fiber, though yoke 110 may be formed from any appropriate material. In the embodiment shown, yoke 110 is configured for use with five rotor blades 106, though yoke 110 may be configured for use with any appropriate number of blades.

Yoke 110 has five bearing pockets 114, one bearing pocket 114 corresponding to each rotor blade 106. Each bearing pocket 114 carries an axisymmetric elastomeric spherical bearing 116. Each bearing 116 is spaced a radial distance from mast axis 108 and transfers centrifugal force from the associated rotor blade 106 to yoke 110. Each bearing 116 forms a lead-lag hinge to allow for limited rotation of associated rotor blade 106 relative to yoke 110 in in-plane lead and lag directions, as indicated by arrows 118 and 120, respectively, and bearing 116 also forms a flap hinge that allows for limited rotation in out-of-plane flapping directions, as indicated by arrows 122 and 124. Each bearing 116 also allows for limited rotation about a pitch change axis 126. While each rotor blade 106 can lead and lag about the associated bearing 116, during operation the centrifugal force tends to force each rotor blade 106 toward a centered, neutral position. It is from this neutral position that each rotor blade 106 can lead, by rotating forward (in the direction of rotation about mast axis 108, indicated by arrow 118) in-plane relative to yoke 110, or lag, by rotating rearward (indicated by arrow 120) in-plane relative to yoke 110.

A blade grip 128 couples each rotor blade 106 to associated bearing 116, each blade grip 128 being shown as an elongated U-shaped structure, comprising an upper plate 130, a lower plate 132, and a curved inner portion 134 connecting upper and lower plates 130, 132. Each blade grip 128 is connected to an inner end of a rotor blade 106 with fasteners 136, thereby allowing loads from each rotor blade 106 to be transferred through blade grip 128 and bearing 116 to yoke 110. A pitch horn 138 is coupled to each blade grip 128, allowing for actuation by a pitch link 140 of a flight control system coupled to pitch horn 138 for causing rotation of blade grip 128 and rotor blade 106 together about pitch change axis 126 for cyclic and collective control of rotor blades 106. Though not shown, a droop stop limits droop of each rotor blade 106 and blade grip 128 assembly toward fuselage 102 when rotor assembly 104 is slowly rotating about mast axis 108 or at rest.

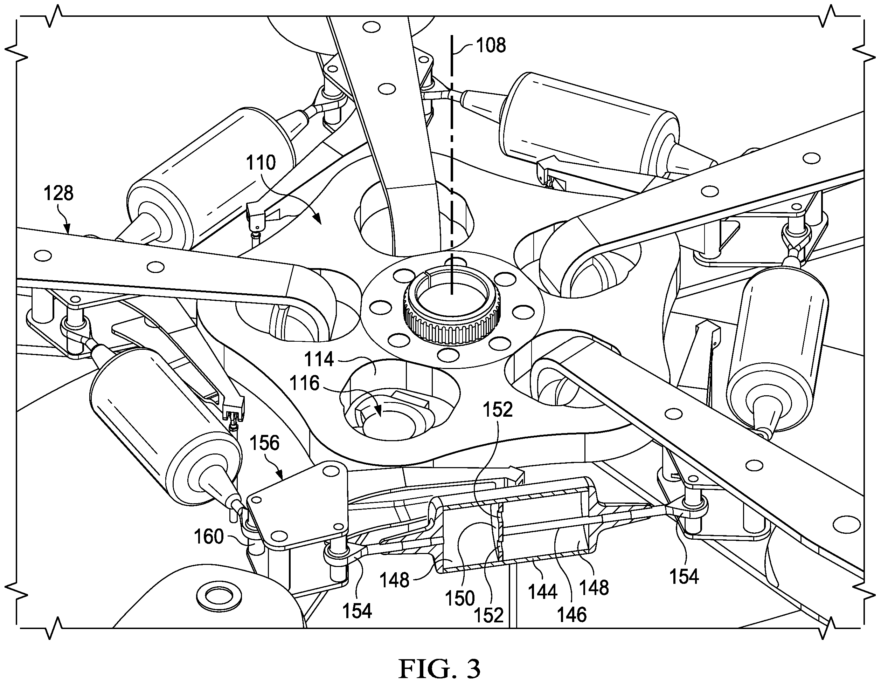

Each rotor blade 106 is coupled to each adjacent rotor blade 106 by a damper assembly 142, and each damper assembly 142 provides a resistive force and cooperates with each adjacent damper assembly 142 to prevent large oscillations in lead-lag directions 118, 120. As shown in FIG. 3, each damper assembly 142 may comprise a pressure tube 144, a piston rod 146, and a damping medium 148. Piston rod 146 includes a piston head 150 which includes orifices 152 extending therethrough. Orifices 152 may include unidirectional valves (not shown) therein to control the flow of damping medium 148 through orifices 152 when piston rod 146 is moved relative to pressure tube 144. Moreover, orifices 152, or the optional valves, may be adjustable to modify the resistive force provided by damper assemblies 142 to rotor blades 106. Pressure tube 144 and piston rod 146 may be formed from metal or any other suitable material. Damping medium 148 may comprise a hydraulic fluid or any other suitable fluid or gas. A connector, such as a rod end bearing 154, is installed at each end of damper assembly 142. While damper assemblies 142 are described as simple mono-tube dampers, it should be understood that damper assemblies 142 could be any type of damper including but not limited to: twin-tube dampers, hysteresis dampers, dry or wet friction dampers, or magnetorheological dampers, wherein a magnetic field may continuously modify the fluid viscosity, and thereby modifying the damping properties.

To provide for coupling of damper assemblies 142 to blade grips 128, a damper block 156 is rigidly coupled to each blade grip 128 with fasteners 158, and each damper block 156 includes a pair of shafts 160 sized for receiving rod end bearings 154. When assembled, each damper assembly 142 can be rotated a limited amount relative to each damper block 156, allowing for blade grips 128 and rotor blades 106 to rotate about pitch change axis 126 without materially affecting movement in lead and lag directions 118, 120 relative to each other and to yoke 110. The resistive force of each damper assembly 142 is transferred to each blade grip 128 through associated rod end bearing 154, into damper block 156, and into adjacent blade grip 128 to resist relative motion between blade grips 128 and their associated rotor blades 106.

The configuration of rotor assembly 104 allows rotor blades 106 to "pinwheel" relative to yoke 110, in which all rotor blades 106 rotate in the same lead or lag direction 118, 120 relative to yoke 110, and this may especially occur in lag direction 120 during initial rotation about mast axis 108 of rotor assembly 104 from rest. As the centrifugal force on rotor blades 106 builds with their increased angular velocity, rotor blades 106 will rotate forward in the lead direction 118 to their angular neutral position relative to yoke 110.

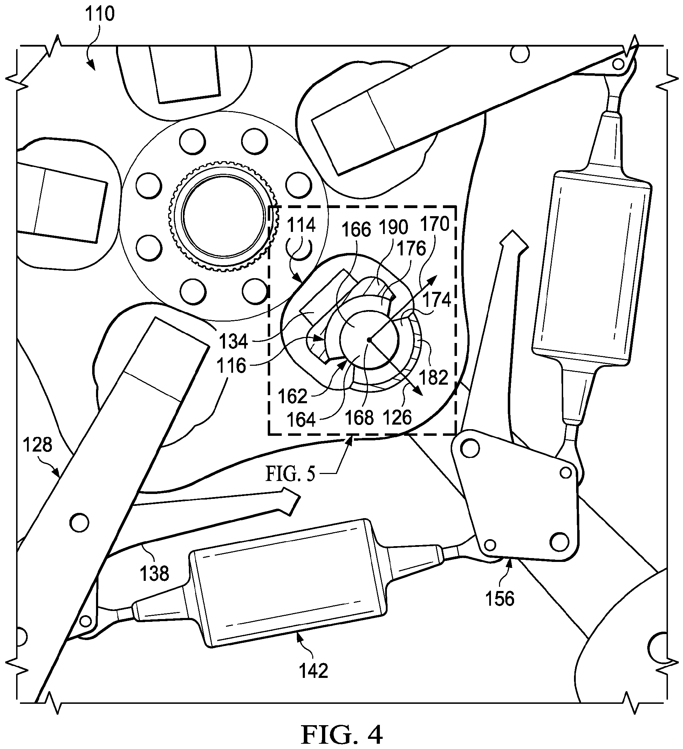

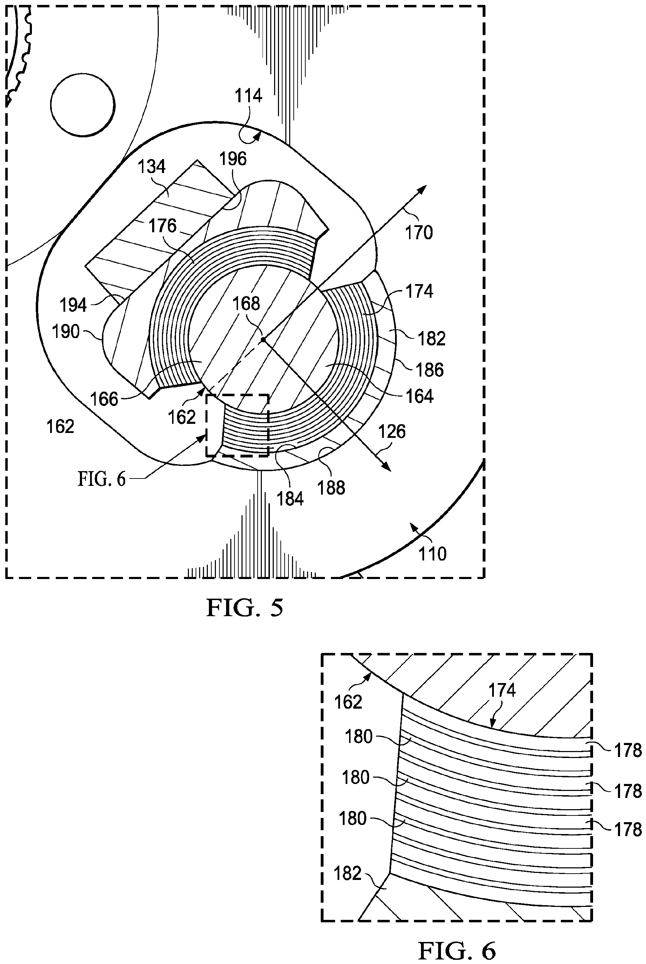

Referring to FIGS. 4 and 5, bearing 116 is shown in cross-section within bearing pocket 114. Bearing 116 includes a spherical central member 162 with a first hemisphere 164 oriented toward rotor blade 106 and a second hemisphere 166 opposite first hemisphere 164. A center point 168 of spherical central member 162 is the intersection ofpitch change axis 126, a flap hinge axis 170, and a lead-lag hinge axis (the lead-lag axis is not shown, it is vertical into the page at center point 168 and is perpendicular to pitch change axis 126 and flap hinge axis 170). Accordingly, each rotor blade 106 may rotate about pitch change axis 126 to modify the amount of lift generated by rotor blades 106. Each rotor blade 106 may also rotate in the directions of arrows 122 and 124 about flap hinge axis 170. And each rotor blade 106 may rotate in lead and lag directions 118, 120 about the lead-lag hinge axis. Bearing 116 further includes a first partially-spherical member 174 coupled to first hemisphere 164 and a second partially-spherical member 176 coupled to second hemisphere 166. Spherical central member 162 is made of a rigid material and first and second partially-spherical members 174, 176 are, at least in part, elastomeric. As shown in FIGS. 5 and 6, and first and second partially-spherical members 174, 176 are preferably constructed of alternating elastomeric layers 178 coupled to rigid layers 180.

The connection of each bearing 116 to yoke 110, and the transmission of forces therebetween, is facilitated by a cup 182. Cup 182 has a concave inner surface 184 configured to accept a portion of bearing 116 therein. Cup 182 includes a convex outer contact surface 186 configured to engage a concave support surface 188 of bearing pocket 114. The complementary curved surfaces 186, 188 provide for a smooth transmission of forces therebetween, thereby avoiding stress risers in yoke 110. Cup 182 may be coupled to concave support surface 188 using any applicable method of attachment including mechanical apparatuses and/or chemical agents. Cup 182 may also include a groove (not shown) in convex outer contact surface 186 configured to receive a portion of concave support surface 188 therein. Cup 182 may include flanges (not shown) extending from convex outer contact surface 186 configured to extend along an upper and lower surface of yoke 110 proximate concave support surface 188, or configured to extend into a corresponding slot in yoke 110. The flanges may include openings extending therethrough to accept connection devices therein. Alternatively, cup 182 may be integral to yoke 110 or attached thereto with the composite material from which yoke 110 is fabricated.

Connection of each bearing 116 to corresponding blade grip 128, and the transmission of forces therebetween, is facilitated by a bracket 190. Bracket 190 has a concave inner surface 192 configured to accept a portion of bearing 116 therein. Bracket 190 includes an outer contact surface 194 configured to engage a support surface 196 of curved inner portion 134 of blade grip 128. Bracket 190 may be coupled to curved inner portion 134 using any applicable method of attachment including mechanical apparatuses and/or chemical agents. Bracket 190 may also include a groove (not shown) in outer surface 194 configured to receive a portion of curved inner portion 134 therein. Bracket 190 may include flanges (not shown) extending from outer surface 194 configured to extend along sides of curved inner portion 134, or configured to extend into a corresponding slot in curved inner portion 134. The flanges may include openings extending therethrough to accept connection devices therein. Alternatively, bracket 190 may be integral to blade grip 128.

At least one embodiment is disclosed, and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rₗ, and an upper limit, Rᵤ, is disclosed, any number falling within the range is specifically disclosed. In particular, the following numbers within the range are specifically disclosed: R=Rₗ +k * (Rᵤ-Rₗ), wherein k is a variable ranging from 1 percent to 100 percent with a 1 percent increment, i.e., k is 1 percent, 2 percent, 3 percent, 4 percent, 5 percent,...50 percent, 51 percent, 52 percent,..., 95 percent, 96 percent, 95 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present invention. Also, the phrases "at least one of A, B, and C" and "A and/or B and/or C" should each be interpreted to include only A, only B, only C, or any combination of A, B, and C.

## Claims

1. An aircraft rotor assembly, comprising:
a yoke defining a plurality of bearing pockets;
a plurality of axisymmetric elastomeric spherical bearings, wherein one of the plurality of axisymmetric elastomeric spherical bearings is at least partially disposed within each of the plurality of bearing pockets; each of the plurality of axisymmetric elastomeric spherical bearings, comprising:
a spherical central member having a first hemisphere and an opposite second hemisphere;
a first partially-spherical member coupled to the first hemisphere of the spherical central member; and
a second partially-spherical member coupled to the second hemisphere of the spherical central member;
a plurality of rotor blades;
a plurality of blade grips, each of the plurality of blade grips coupling one of the plurality of rotor blades to one of the plurality of axisymmetric elastomeric spherical bearings; and
a plurality of damper assemblies, each of the plurality of damper assemblies being coupled between two of the plurality of rotor blades, wherein the plurality of damper assemblies are configured to maintain a first in-plane frequency of less than 1/rev for each rotor blade.

2. An aircraft rotor assembly, comprising:
a yoke defining a plurality of bearing pockets;
a plurality of axisymmetric elastomeric spherical bearings, wherein one of the plurality of axisymmetric elastomeric spherical bearings is at least partially disposed within each of the plurality of bearing pockets; each of the plurality of axisymmetric elastomeric spherical bearings, comprising:
a spherical central member having a first hemisphere and an opposite second hemisphere;
a first partially-spherical member coupled to the first hemisphere of the spherical central member; and
a second partially-spherical member coupled to the second hemisphere of the spherical central member;
a plurality of rotor blades;
a plurality of blade grips, each of the plurality of blade grips coupling one of the plurality of rotor blades to one of the plurality of axisymmetric elastomeric spherical bearings; and
a plurality of damper assemblies, each of the plurality of damper assemblies being coupled between two of the plurality of rotor blades, wherein the plurality of damper assemblies are configured to maintain a first in-plane frequency of less than 1/rev for each rotor blade;
wherein each of the plurality of axisymmetric elastomeric spherical bearings comprises a lead-lag hinge and a flap hinge.

3. An aircraft, comprising:
a fuselage;
a powerplant;
a mast coupled to the powerplant; and
a rotor assembly, comprising:
a yoke coupled to the mast, the yoke defining a plurality of bearing pockets;
a plurality of axisymmetric elastomeric spherical bearings, wherein one of the plurality of axisymmetric elastomeric spherical bearings is at least partially disposed within each of the plurality of bearing pockets; each of the plurality of axisymmetric elastomeric spherical bearings, comprising:
a spherical central member having a first hemisphere and an opposite second hemisphere;
a first partially-spherical member coupled to the first hemisphere of the spherical central member; and
a second partially-spherical member coupled to the second hemisphere of the spherical central member;
a plurality of rotor blades;
a plurality of blade grips, each of the plurality of blade grips coupling one of the plurality of rotor blades to one of the plurality of axisymmetric elastomeric spherical bearings; and
a plurality of damper assemblies, each of the plurality of damper assemblies being coupled between two of the plurality of rotor blades, wherein the plurality of damper assemblies are configured to maintain a first in-plane frequency of less than 1/rev for each rotor blade.

4. The aircraft rotor assembly of claim 1 or of claim 2, or the aircraft of claim 3, wherein the first and second partially-spherical members comprise pluralities of alternatively layered elastomeric members and rigid members.

5. The aircraft rotor assembly of claim 4, as it depends from claim 1 or from claim 2, or the aircraft of claim 4, further comprising:
a plurality of cups, each of the plurality of cups having a concave inner surface configured to cooperate with the first partially-spherical member of one of the plurality of axisymmetric elastomeric spherical bearings, each of the plurality of cups further including a contact surface opposite the concave inner surface configured to cooperatively engage a support surface of one of the plurality of bearing pockets.

6. The aircraft rotor assembly of claim 5 as it depends indirectly from claim 1 or from claim 2, of the aircraft of claim 5, wherein the contact surfaces of the plurality of cups are, at least in part, curved and the support surfaces of the plurality of bearing pockets are, at least in part, curved.

7. The aircraft rotor assembly of claim 6 as it depends indirectly from claim 1 or from claim 2, or the aircraft of claim 6, further comprising:
a plurality of brackets, each of the plurality of brackets having a concave inner surface configured to cooperate with the second partially-spherical member of one of the plurality of axisymmetric elastomeric spherical bearings, each of the plurality of brackets further including a contact surface opposite the concave inner surface configured to cooperatively engage a support surface of one of the plurality of blade grips.

8. The aircraft rotor assembly of claim 7 as it depends indirectly from claim 1 or from claim 2, or the aircraft of claim 7, wherein the yoke comprises a composite material.

9. The aircraft rotor assembly of claim 8 as it depends indirectly from claim 1 or the aircraft of claim 8, wherein each of the plurality of rotor blades are able to rotate about the axisymmetric elastomeric spherical bearing to which it is coupled by at least 1 degree in a lead direction and at least 1 degree in a lag direction.

10. The aircraft rotor assembly of claim 8 as it depends indirectly from claim 2, wherein each of the plurality of rotor blades are able to rotate about the lead-lag hinge by at least 1 degree in a lead direction and at least 1 degree in a lag direction.

11. The aircraft rotor assembly of claim 9 or of claim 10, or the aircraft of claim 9, further comprising:
a control system for collective and cyclic control of a pitch of each of the plurality of rotor blades.

12. The aircraft rotor assembly of claim 1 or of claim 2 or of any preceding claim, or the aircraft of claim 3 or of any preceding claim, wherein each of the plurality of rotor blades may be rotated about a pitch change axis passing through the axisymmetric elastomeric spherical bearing coupled thereto.
